# EUROPÄISCHE PATENTSCHRIFT

(11) **EP 0 807 808 B1**
(45) Veröffentlichungstag und Bekanntmachung des Hinweises auf die Patenterteilung: **02.01.2002**
(21) Anmeldenummer: 97107415.8
(22) Anmeldetag: 06.05.1997
(51) Int. Cl.: G01N 11/14

(54) **Viskosimeter**
Viscosimeter
Viscosimètre

(30) Priorität: 15.05.1996 AT 86496
(43) Veröffentlichungstag der Anmeldung: 19.11.1997
(73) Patentinhaber: ÖSTERREICHISCHE VIALIT GESELLSCHAFT mbH, 5280 Braunau/Inn (AT)
(72) Erfinder: Bleier, Johann, Dr., A-4962 Mining (AT)
(74) Vertreter: Grabherr, Claudia, Dipl.Ing.

(56) Entgegenhaltungen:
- DE-A- 3 437 937
- DE-C- 3 423 579
- US-A- 4 045 999
- US-A- 4 643 021
- SOVIET INVENTIONS ILLUSTRATED Section EI, Week 8549 Derwent Publications Ltd., London, GB; Class S03, AN 85-309384 XP002064281 & SU 1 160 277 A (AS USSR BIO-INSTR)
- SOVIET INVENTIONS ILLUSTRATED Section EI, Week 8307 Derwent Publications Ltd., London, GB; Class S03, AN 83-C4051K XP002064282

## Beschreibung

Die Erfindung betrifft ein Rotationsviskosimeter mit vorzugsweise oszillierendem Meßprinzip enthaltend eine über einen Antrieb um ihre Längsachse drehbare Meßwelle, die an einem ihrer Enden einen Rotor aufweist, und einen dem Rotor gegenüberliegenden Stator, wobei der Rotor auf einer zwischen Rotor und Stator befindlichen Kugel gelagert und wobei ein zwischen dem Rotor und dem Stator gebildeter Raum zur Aufnahme einer Meßprobe bestimmt ist.

Viskosimeter mit rotierendem oder auch mit oszillierendem Meßprinzip, bei dem sich die Meßwelle mit dem Rotor nicht kontinuierlich dreht, sondern nur um wenige Winkelgrade um einen Rotationsmittelpunkt schwingt, sind bekannt. Sie werden hauptsächlich für das Erfassen von Viskositätskennwerten viskoser Stoffe eingesetzt. Darüberhinaus sind auch Rheometer bekannt, die zusätlich zu den Viskositätskennwerten die Ermittlung von Elastizitätskennwerten des visko-elastischen Stoffes ermöglichen. Derartige Rheometer sind von der Erfindung ebenfalls betroffen und durch die Anmeldung ausdrücklich mitumfaßt. Es sei darüberhinaus angemerkt, daß der Stator nicht feststehend sein muß, da es lediglich auf eine Relativbewegung zwischen dem Rotor und dem Stator ankommt.

Ein Rotationsviskosimeter der eingangs genannten Art ist in der DE 34 23 579 C beschrieben. Das Viskosimeter enthält eine vertikale Meßwelle, die an ihrem unteren Ende einen Rotor in Form eines Innenzylinders aufweist, dem ein Stator in Form eines zylindrischen Topfes gegenüberliegt, wobei zwischen Rotor und Stator die Meßsubstanz aufgenommen werden kann. Sowohl in der unteren horizontalen Fläche des Rotors als auch am Boden des Stators ist ein schalenförmiges Lager vorgesehen, wobei diese Lager eine Kugel auf dem Großteil ihrer Oberfläche berühren. Um die Reibung zwischen der Kugel und den Lagern zu verringern, ist im Bereich der Kugel eine Sperrflüssigkeit vorhanden und darüber kann die Meßprobe geschichtet werden.

In der Praxis sind die Viskosimeter oder Rheometer mit sehr aufwendiger Mechanik und Elektronik ausgestattet, weil sie möglichst reibungsfrei und hochauflösend arbeiten müssen, da sehr kleine Kräfte und kleine Wegamplituden zu erfassen sind. Für die Lagerung der Meßwelle werden aus diesem Grund in der Regel entweder Luftlager oder Magnetlager verwendet, bei denen es sich um aufwendige, feinmechanische Konstruktionen handelt, und für den Antrieb werden Motoren mit aufwendiger digital-elektronischer Steuerung eingesetzt. Derartige Geräte sind deshalb sehr teuer.

Viskosimeter und Rheometer sind unentbehrliche Meßgeräte für alle Bereiche der chemischen Industrie (Petrochemie, Lebensmitteltechnologie, Kunststoffverarbeitung u.a.), Medizin, Biologie etc. Durch die häufig sehr aufwendige Bauart der handelsüblichen Geräte werden sie zwar in der Forschung und Entwicklung in gut ausgestatteten Laboratorien eingesetzt, finden aber wegen ihres hohen Preises kaum Eingang in die Bereiche der Produktionsüberwachung in kleineren Laboratorien, obwohl sie auch hier wertvolle Erkenntnisse für die Qualitätskontrolle und Entwicklungsarbeiten liefern könnten.

In vielen Industriezweigen spielen Viskositätsmessungen eine große Rolle, insbesondere wenn die zu verarbeitenden Stoffe sich aufgrund einer starken Temperaturabhängigkeit ihrer Viskosität und eines sehr geringen Wärmeleitvermögens als schwierig zu messende Stoffe erweisen. Die modernen Viskosimeter und Rheometer könnten sich gut für fein auflösende Messungen eignen, der hohe Preis dieser Geräte ist aber für eine breitere Anwendung ein Hindernis. Daher wird in der Regel noch immer mit sehr einfachen, sehr alten Methoden gemessen, die nur sehr eingeschränkte Aussagen über die qualitativen Stoffeigenschaften zulassen.

Es ist daher wünschenswert, den Einsatz derartiger Meßgeräte auch jenen Bereichen der Industrie zugänglich zu machen, in denen die Geräte bisher aus Kostengründen nicht oder nur in geringem Umfang eingesetzt werden.

Der Erfindung liegt die Aufgabe zugrunde, ein Viskosimeter oder Rheometer der bekannten Art zu schaffen, mit dem trotz eines einfachen Aufbaus eine ausreichende Meßgenauigkeit erzielbar ist.

Diese Aufgabe wird erfindungsgemäß dadurch gelöst, daß bei dem eingangs genannten Rotationsviskosimeter die Kugel die einander zugewandten Oberflächen des Rotors und des Stators punktförmig berührt. Dadurch ergibt sich nur ein einziger reibungsbehafteter Auflagepunkt des Rotors, wodurch die Reibung sehr gering gehalten ist. Somit sind auch die Reibungsverluste bei der Lagerung der Meßwelle gering und es ist gleichzeitig eine konstruktiv sehr einfache und kostengünstige Lagerung geschaffen.

Dieser erfindungsgemäße Aufbau erlaubt es auch, daß unabhängig von der Beschaffenheit der Meßprobe diese im gesamten Raum zwischen dem Rotor und dem Stator vorliegen kann, d.h., daß die Kugel sich in der Meßprobe befinden kann. Auf diese Weise dient die Kugel nicht nur der axialen Abstützung der Meßwelle, sondern definiert auch den Abstand zwischen dem Rotor und dem Stator und somit die Größe der Meßkammer. Um im Laufe der Betriebszeit Abnutzungserscheinungen an der Kugel oder den zugeordneten Kontaktflächen des Rotors oder Stators zu vermeiden, können diese Bauteile zumindest abschnittsweise gehärtete Oberflächen aufweisen.

Die axiale Lagerung der Meßwelle auf der Kugel erfordert es, die Meßwelle bzw. den Rotor in Querrichtung relativ zum Stator in einer vorbestimmten Ausrichtung zu halten. Vorzugsweise ist deshalb die Kugel aus magnetisierbarem Material und wird von im Rotor und im Stator vorgesehenen und zur Längsachse der Meßwelle rotationssymetrischen Magneten zentriert. Dadurch befindet sich der einzige reibungsbehaftete Auflagepunkt auf der Längsachse der Meßwelle, d.h. der Mittelpunkt der Kugel liegt im Drehnullpunkt und die Reibungskraft hat daher praktisch keinen Hebelarm und kann somit vernachlässigt werden.

Darüberhinaus dient die Kugel dabei der Magnetfeldführung und -bündelung, wodurch die Zentrierwirkung zwischen dem Rotor und dem Stator erhöht ist. Alternativ ist es jedoch auch möglich, daß die Kugel aus einem nichtmagnetisierbaren Material besteht, wobei dann eine Zentrierung und eine Lagesicherung der Kugel in mechanischer Weise erfolgen kann.

Nach einer bevorzugten Ausführungsform der Erfindung weist die Meßwelle an ihrem dem Rotor abgewandten Ende einen weiteren, zu ihrer Längsachse rotationssymmetrischen und axial gepolten Magneten auf, der einem in einem ortsfesten Träger angeordneten, ebenfalls zur Längsachse der Meßwelle rotationssymmetrischen und axial gepolten Gegenmagneten gegenüberliegt, wobei die beiden Magnete einander anziehend gepolt sind und zwischen dem Ende der Meßwelle und dem Träger ein Spalt vorhanden ist. Dadurch wird die Meßwelle berührungslos und damit reibungslos zentriert.

Darüberhinaus ist die Meßwelle auf diese Weise mit einer nach oben gerichteten Lagerkraft beaufschlagt, wodurch die untere Auflagerung auf der Kugel entlastet ist, was zu einer Verschleißreduzierung und besseren Laufeigenschaften führt.

Wenn der Rotor einschließlich der Meßwelle mit dem Schwerpunkt unter der Kugel liegt und ausbalanciert ist, kann das obere Lager der Meßwelle gegebenenfalls vollständig entfallen.

Als Drehantrieb für die Meßwelle kann ein bekannter Antriebsmotor Verwendung finden. Erfindungsgemäß kann die Meßwelle jedoch auch, wie an sich bekannt, mit einem normal zu ihrer Längsachse ausgerichteten Dreharm verbunden sein, der an seinen beiden Armen rotationssymmetrisch Antriebsmagnete trägt, die in Rotationsrichtung gepolt sind und sich im Wirkungsbereich eines ortsfesten Magnetsystems befinden. Durch die Wirkung des Magnetsystems auf die Antriebsmagnete kann die Rotationsbewegung gesteuert werden. Dabei sollten die Antriebsmagnete auf der Höhe der Meßprobe angeordnet sein.

Vorzugsweise besteht das Magnetsystem aus zwei Helmholtzspulen- oder Tauchspulenpaaren, die mit Wechselspannung versorgt werden, wenn eine oszillierende Bewegung der Meßwelle gewünscht ist.

Nach einer anderen Ausführungsform der Erfindung ist das Magnetsystem ein Permanentmagnetsystem, das manuell in die Wirkposition bringbar ist. Diese einfache Ausführungsform der Erfindung kann für Einzeloszillationsmessungen herangezogen werden.

Weitere Einzelheiten und Merkmale der Erfindung sind aus der folgenden Beschreibung eines bevorzugten Ausführungsbeispiels unter Bezugnahme auf die Zeichnung ersichtlich:

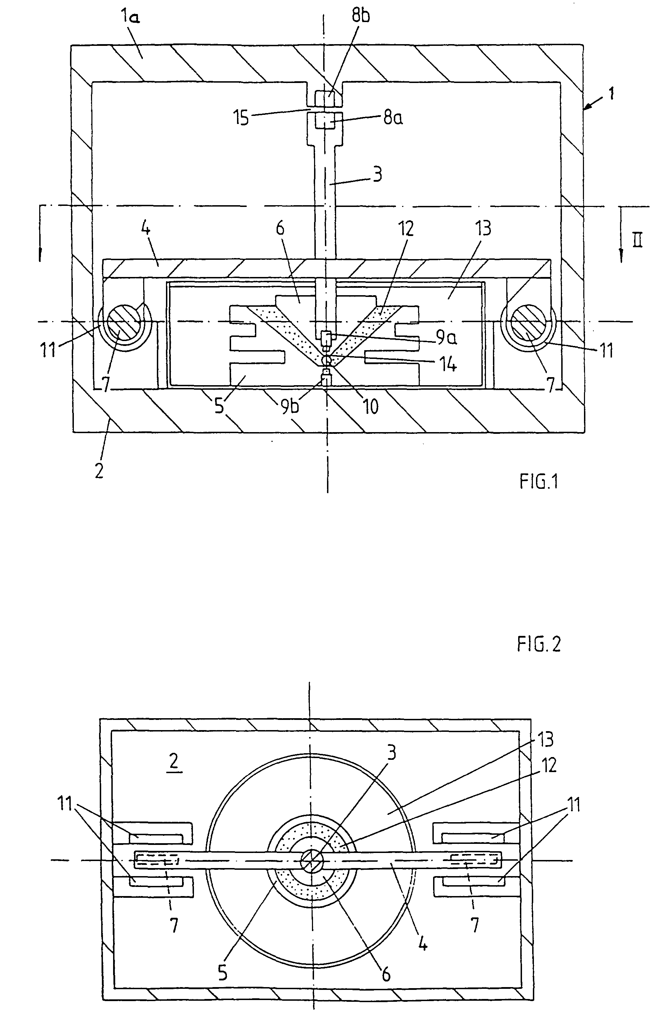

- Fig. 1: zeigt einen Vertikalschnitt durch ein Viskosimeter,
- Fig. 2: einen Horizontalschnitt entlang der Linie II-II in Fig. 1 und
- Fig. 3: eine mögliche Meßschaltung in schematischer Darstellung.

Das Gehäuse 1 weist einen oberen Träger 1a, der einen Magneten 8b trägt, und einen unteren Träger 2 auf, der einen Stator 5 sowie zwei Helmholtzspulenpaare 11 trägt. Der Stator 5 weist eine umgekehrt kegelstumpfförmige Ausnehmung zur Aufnahme einer Meßprobe 12 auf, auf deren Grundfläche eine Kugel 10 liegt, die von einem Rotor 6 im Auflagepunkt 14 berührt wird. Der Rotor 6 befindet sich am unteren Ende einer vertikalen Meßwelle 3 und enthält einen Magneten 9a, der gemeinsam mit einem vorzugsweise gleichartigen Magneten 9b im Stator 5 die Kugel 10 zentriert. Am oberen Ende der Meßwelle 3 befindet sich ein Magnet 8a, der im Zusammenwirken mit dem ortsfesten Magneten 8b die Meßwelle 3 zentriert.

Die Meßwelle 3 ist auf diese Weise labil geführt und nicht starr gelagert. Die Zentrierung erfolgt berührungslos mit Hilfe der kleinen Hochleistungs-Dauermagneten 8a, 8b auf einfache Weise. Der einzige (reibungsbehaftete) mechanische Auflagepunkt 14 liegt im Dreh-Nullpunkt, die Reibungskraft hat daher praktisch keinen Hebelarm und ist damit vernachlässigbar klein. Durch diesen besonderen Aufbau kann der Rotor 6 gemeinsam mit der Meßwelle 3 zum Zwecke des Auswechselns der Meßprobe 12 mit einem Handgriff ausgebaut werden.

Die Meßwelle 3 ist relativ kurz (einige cm bis maximal 20 cm) und liegt mit ihrem unteren Ende direkt in der Meßprobe 12. Sie ruht (als mechanischer Auflagepunkt) zentrisch symmetrisch auf der kleinen Kugel 10 (Durchmesser etwa 0,5 bis 2 mm), die sich in der Meßprobe 12 befindet. Diese Kugel 10 bestimmt dadurch die Weite des Meßspaltes in eindeutiger Weise und wird durch die kleinen Magnete 9a, 9b, die der Kugelgröße entsprechen, exakt zentriert. An ihrem oberen Ende ist die Meßwelle 3 freischwebend, sie trägt jedoch an diesem Ende den starken Permanentmagneten oder Rotor-Magneten 8a (NeFeB oder SmCo o. ä. als Magnetwerkstoff), der zentrisch-symmetrisch angeordnet und axial gepolt ist. Durch einen wenige mm großen Luftspalt 15 getrennt liegt gegenüber dem Rotor-Magneten 8a der Stator-Magnet 8b als Gegenmagnet, der auf Anziehung gepolt ist. Der Stator-Magnet 8b zieht die Meßwelle 3 reibungslos in axiale Richtung, so daß die Meßwelle 3 exakt senkrecht ausgerichtet wird. Die Auflagerung der Meßwelle 3 auf der Kugel 10 wird durch die axiale Zugkraft des oberen Magneten-Paares 8a, 8b gleichzeitig gewichtsmäßig entlastet, so daß die Meßwelle 3 praktisch reibungsfrei auf dem punktuellen Kugelauflager in der Meßprobe 12 ruht. Die Viskosität der Meßprobe 12 bewirkt eine weitere rotationssymmetrische Stabilisierung der Meßwelle 3 während der oszillierenden (oder rotierenden) Bewegung in der Meßphase.

Diese Anordnung ist sehr einfach herstellbar und sehr wirkungsvoll. Die Magnete in der Größe von wenigen Millimietern bis maximal 20 mm kosten wenig. Das System ist durch die einfache Zerlegbarkeit sehr bedienungsfreundlich, wobei ein Verbiegen der Meßwelle 3 mit Sicherheit auszuschließen ist.

Wenn der Meßbetrieb nicht rotierend, sondern nur oszillierend erfolgt, kann auch der Antrieb auf einfache Weise hergestellt werden. Die Oszillation beträgt nur wenige Winkelgrade, was bei einem Radius des Antriebssystems von z. B. 50 mm einer Wegamplitude von nur wenigen Millimetern entspricht.

Der Aufbau des Antriebssystems besteht aus einem Querträger 4, der durch die Meßwelle 3 exakt horizontal hindurchgeführt ist. An den beiden Enden des Querträgers 4 sind rotationssymmetrisch zwei Permanentmagnete 7 befestigt, die mechanisch derart angeordnet sind, daß sie sich exakt in der Ebene der Meßprobe 12 befinden. Dadurch ist gewährleistet, daß die Meßwelle 3 infolge des viskosen Widerstandes der Meßprobe 12 beim Meßbetrieb nicht auspendelt. Die beiden Permanentmagnete 7 weisen mit ihren Polen in die Bewegungsrichtung, also in Richtung des Umfanges der Rotationsbewegung.

Die Magnete 7 befinden sich innerhalb des Wirkraumes zweier Helmholtz-Spulenpaare 11. Eine Helmholtz-Spule hat zwischen den beiden Einzelspulen eine sehr homogene magnetische Flußdichte, unabhängig von der genauen Position im Wirkraum. Je nach Polung des Spulenstromes und seiner Stromstärke wird der Magnet 7 daher mehr oder minder kräftig in die entsprechende Richtung gezogen. Legt man eine Wechselspannung an die Spule 11 an, so entsteht die gewünschte Oszillation der Meßwelle 3 in rotationssymmetrischer Richtung. Über die Auslegung des Hebelarmes (=Abstand der Antriebsmagnete 7 von der Drehachse der Meßwelle 3) kann die Kraftamplitude sehr gut an den Viskositätsmeßbereich bzw. die Probengeometrie angepaßt werden.

Alternativ zur Helmholtz-Spule können auch Tauchspulensysteme (Prinzip des dynamischen Lautsprechers) oder bei einfacheren Meßaufgaben für Einzel-Oszillation auch Permanentmagnetsysteme, die manuell in den Wirkbereich der beiden Antriebsmagnete eingeschwenkt werden, Verwendung finden.

Die Antriebswechselspannung kann mit handelsüblichen durchstimmbaren Frequenzgeneratoren in gängigen Kurvenformen (Rechteck, Dreieck, Sinus, Impuls u.a.) oder mit einem PC oder mit Rückkopplungs-Schwingungserzeugern erzeugt werden.

Die Kraftamplituden können relativ einfach ermittelt werden, da sie streng mit der Stromstärke der Antriebswechselspannung korrellieren. Man kann sie rechnerisch erfassen oder über Kalibrierverfahren anhand bekannter Eichmeßproben bzw. indirekt über eine Kraftmessung (z.B. mittels Waagen) experimentell bestimmen.

Die Wegamplituden lassen sich ebenfalls mit geringem Aufwand über optoelektronische Sensoren oder Magnetfeldsensoren (z.B. Hallsonde) erfassen. Bei letzterer Methode kann der Magnetfeldeinfluß des Antriebsmagneten direkt das Meßsingal der Hallsonde verursachen, ein besonders geringer baulicher Aufwand wird damit ermöglicht.

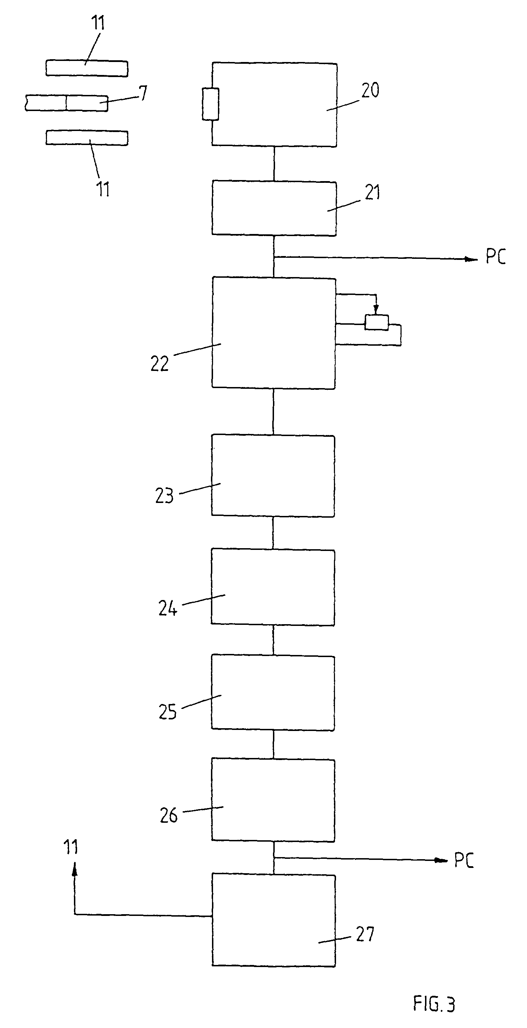

Eine solche Erfassung der Wegamplitude ist der Schaltung gemäß Figur 3 zugrundegelegt. Die Bewegung des Antriebsmagneten 7 verändert das Magnetfeld zwischen den Spulen 11 und diese Magnetfeldänderung wird von der Hallsonde 20 erfaßt. Das durch einen entsprechenden Instrumentenverstärker 21 verstärkte Spannungssignal wird als Wegsignal der Datenverarbeitungsanlage einerseits und einem Gleichspannungsverstärker 22 mit variabler Verstärkung andererseits zugeleitet. Über diese Gleichspannungsverstärker 22 läßt sich die maximale Wegamplitude einstellen. Das so verstärkte Signal wird einem Schmitt-Trigger 23 zugeführt und verursacht - sofern die Triggerschwelle überschritten wird - ein Ausgangssignal, das über einen Integrator 24 mit Dreiecksausgangsspannung und gegebenenfalls einen Dreieck-Sinuswandler 25 sowie eine Ausgangsstufe 26 (± 10 V, 1-100 mA) ein Steuersingal initiiert, das einerseits als Kraftsignal der Datenverarbeitung und andererseits der Steuerung 27 der Spulen 11 zugeleitet wird. Diese Schaltung bewirkt, daß bei Erreichen der maximalen Wegamplitude durch den Antriebsmagneten 7 das Magnetfeld zwischen den Spulen 11 umgepolt wird, so daß der Antriebsmagnet 7 zwischen den beiden Spulen 11 hin und her schwingt. Über die Datenverarbeitungsanlage können aus den Wegsignalen und den Kraftsignalen die plastischen und elastischen Eigenschaften der Meßprobe bestimmt werden.

Die Verarbeitung der Meßsingale wird in Abstimmung auf das gewünschte Meßziel entweder analog, digital oder kombiniert vorgenommen. Für höhere Anforderungen empfiehlt sich jedenfalls die sehr preisgünstig mögliche PC-unterstützte Maßdatenerfassung. Die Meßserien können kraft-, weg-, phasen-, frequenz- oder temperaturgesteuert geführt werden.

Ein sehr einfacher Meßbetrieb läßt sich gesteuert durchführen. Eine gewünschte Wegamplitude wird vorher eingestellt. Über eine Triggerschaltung wird bei Erreichen der Soll-Wegamplitude der Speisestrom der Antriebsspulen umgepolt, so daß eine (rückgekoppelte) Oszillation entsteht. Je höher die Viskosität der Probe ist, desto länger wird die Periodendauer der einzelnen Schwingung und desto langsamer also die Schwingfrequenz. Die Periodendauer kann auf sehr einfache und ebenfalls preisgünstige Weise ermittel und angezeigt werden. In diesem Betriebsmodus können sehr einfach Temperaturviskositätskurven ermittelt werden.

Etwas aufwendiger ist die Ermittlung von Speicher- und Verlustmodulen. Hierzu wird am besten über eine fest vorgegebene Sinusfrequenz die Oszillation erregt. Aus der Phasenverschiebung und den Amplituden von Kraft- und Wegsignal lassen sich mittels PC-Auswertung die rheologischen Kenndaten errechnen.

## Patentansprüche

1. Rotationsviskosimeter mit vorzugsweise oszillierendem Meßprinzip enthaltend eine über einen Antrieb um ihre Längsachse drehbare Meßwelle, die an einem ihrer Enden einen Rotor aufweist, und einen dem Rotor gegenüberliegenden Stator, wobei der Rotor auf einer zwischen Rotor und Stator befindlichen Kugel gelagert und wobei ein zwischen dem Rotor und dem Stator gebildeter Raum zur Aufnahme einer Meßprobe bestimmt ist, **dadurch gekennzeichnet, daß** die Kugel (10) die einander zugewandten Oberflächen des Rotors (6) und des Stators (5) punktförmig berührt.

2. Rotationsviskosimeter nach Anspruch 1, **dadurch gekennzeichnet, daß** die Kugel (10) aus magnetisierbarem Material ist und von im Rotor (6) und im Stator (5) vorgesehenen und zur Längsachse der Meßwelle (3) rotationssymmetrischen Magneten (9a, 9b) zentriert wird.

3. Rotationsviskosimeter nach Anspruch 1 oder 2, **dadurch gekennzeichnet, daß** die Meßwelle (3) an ihrem dem Rotor (6) abgewandten Ende einen weiteren zu ihrer Längsachse rotationssymmetrischen und axial gepolten Magneten (8a) aufweist, der einen in einem ortsfesten Träger (1) angeordneten, ebenfalls zur Längsachse der Meßwelle (3) rotationssymmetrischen und axial gepolten Gegenmagneten (8b) gegenüberliegt, wobei die beiden Magneten (8a, 8b) einander anziehend gepolt sind und zwischen dem Ende der Meßwelle (3) und dem Träger (1) ein Spalt (15) vorhanden ist.

4. Rotationsviskosimeter nach einem der vorhergehenden Ansprüche, **dadurch gekennzeichnet, daß** die Meßwelle (3) mit einem normal zu ihrer Längsachse ausgerichteten Dreharm (4) verbunden ist, der an seinen beiden Armen rotationssymmetrisch Antriebsmagnete (7) trägt, die in Rotationsrichtung gepolt sind und sich im Wirkungsbereich eines ortsfesten Magnetsystems (11) befinden.

5. Rotationsviskosimeter nach Anspruch 4, **dadurch gekennzeichnet, daß** sich die Antriebsmagnete (7) auf der Höhe der Meßprobe (12) befinden.

6. Rotationsviskosimeter nach Anspruch 4 oder 5, **dadurch gekennzeichnet, daß** das Magnetsystem (11) aus zwei Helmholtzspulen- oder Tauchspulenpaaren besteht.

7. Rotationsviskosimeter nach Anspruch 6, **dadurch gekennzeichnet, daß** die Spulen (11) mit Wechselspannung versorgt werden.

8. Rotationsviskosimeter nach Anspruch 4 oder 5, **dadurch gekennzeichnet, daß** das Magnetsystem (11) ein Permanentmagnetsystem ist, das manuell in die Wirkposition bringbar ist.

## Claims

1. A rotational-type viscosimeter preferably working on an oscillating measuring principle, with a measuring shaft rotatable by a drive at its longitudinal axis, having a rotor at one of its ends and a stator opposite to the rotor, the rotor running on a ball arranged between the rotor and the stator, a space formed between the rotor and the stator being intended for locating the measured specimen, **characterised in that** the ball (10) is in contact at the surfaces of the rotor (6) and the stator (5) facing it at single points.

2. A rotational-type vicosimeter according to Claim 1, **characterised in that** the ball (10) is made of a material capable of being magnetized and is centred by the magnet (9a, 9b) envisaged in the stator (5) and rotationally symmetrical to the longitudinal axis of the measuring shaft (3).

3. A rotational-type viscosimeter according to Claim 1 or 2, **characterised in that** the measuring shaft (3) has another magnet (8a) opposite to a counter magnet arranged in a fixed carrier (1), also rotationally symmetrical to the longitudinal axis of the measuring shaft (3) and with axial poles, the poles of the two magnets (8a, 8b) attracting each other, there being a gap (15) between the end of the measuring shaft (3) and the carrier (1).

4. A rotational-type viscosimeter according to one of the preceding Claims, **characterised in that** the measuring shaft (3) is connected to a swing arm (4) normally aligned to its longitudinal axis, carrying roto-symmetrically at its two arms drive magnets (7) which have poles in the direction of rotation and are located within the area in which a fixed magnet system (11) is fixed.

5. A rotational-type viscosimeter according to Claim 4, **characterised in that** the drive magnets (7) are arranged at the height of the measured specimen (12).

6. A rotational-type viscosimeter according to Claim 4 or 5, **characterised in that** the magnet system (11) consists of two pairs of Helmholtz coils or plunger-type coils.

7. A rotational-type viscosimeter according to Claim 6, **characterised in that** the coils (11) operate on a.c. current.

8. A rotational-type viscosimeter according to Claim 4, **characterised in that** the magnet system (11) is a permanent magnet system which can be moved manually into the operating position.

## Revendications

1. Viscosimètre rotatif, utilisant de préférence une méthode de mesure en mode oscillatoire, avec un arbre de mesure entraîné en rotation autour de son axe par une mécanisme d'entraînement, qui porte un rotor à l'une de ses extrémités, et avec un stator disposé en vis-à-vis du rotor, le rotor étant supporté par une bille placée entre le rotor et le stator et un espace formé entre le rotor et le stator étant destiné à recevoir un échantillon de mesure, **caractérisé en ce que** la bille (10) est en contact ponctuel avec les surfaces tournées l'une vers l'autre du rotor (6) et du stator(S).

2. Viscosimètre rotatif selon la revendication 1, **caractérisé en ce que** la bille (10) est en un matériau magnétisable et est centrée par des aimants (9a, 9b) symétriques de révolution par rapport à l'axe longitudinal de l'arbre de mesure (3), prévus dans le rotor (6) et dans le stator (5)0.

3. Viscosimètre rotatif selon la revendication 1 ou 2, **caractérisé en ce que** l'arbre de mesure (3), à son extrémité éloignée du rotor (6), présente un aimant (8a) supplémentaire, symétrique de révolution par rapport à son axe longitudinal et polarisé dans la direction axiale, qui est disposé en vis-à-vis d'un contre-aimant (8b), lui aussi symétrique de révolution par rapport à l'axe longitudinal de l'arbre de mesure (3) et polarisé dans la direction axiale, monté sur un support (1) statiônnaire, les deux aimants (8a, 8b) étant polarisés dans le sens d'une attraction réciproque et un espace (15) existant entre l'extrémité de l'arbre de mesure (3) et le support (1).

4. Viscosimètre rotatif selon une des revendications précédentes, **caractérisé en ce que** l'arbre de mesure (3) est relié à un bras de levier (4) normal à son axe longitudinal, qui porte au niveau de ses deux branches des aimants d'entraînement (7) polarisés dans la direction de rotation et sont disposés dans la zone d'action d'un système d'aimants (11) stationnaire.

5. Viscosimètre rotatif selon la revendication 4, **caractérisé en ce que** les aimants d'entraînement (7) sont disposés à la hauteur de l'échantillon de mesure (12).

6. Viscosimètre rotatif selon la revendication 4 ou 5, **caractérisé en ce que** le système d'aimants (11) est formé de deux bobines de Helmholtz ou de deux couples de bobines mobiles.

7. Viscosimètre rotatif selon la revendication 6, **caractérisé en ce que** les bobines (11) sont alimentées en courant alternatif.

8. Viscosimètre rotatif selon la revendication 4 ou 5, **caractérisé en ce que** le système d'aimants (11) est un système d'aimants permanents qui peut être amené manuellement dans la position active
